Europäisches Patentamt

European Patent Office

Office européen des brevets

(19)

(11) Numéro de publication: **0 215 013**
**B1**

(12) FASCICULE DE BREVET EUROPEEN

(45) Date de publication du fascicule du brevet: 02.05.90

(51) Int. Cl.⁵: **C 02 F 1/48**

(21) Numéro de dépôt: **86901025.6**

(22) Date de dépôt: **12.02.86**

(86) Numéro de dépôt international:
**PCT/CH86/00017**

(87) Numéro de publication internationale:
**WO 86/04887 28.08.86 Gazette 86/19**

(54) CONDITIONNEMENT MAGNETIQUE DE L'EAU DURE.

(30) Priorité: 14.02.85 FR 8502282
17.04.85 FR 8505919
17.04.85 FR 8505920

(43) Date de publication de la demande:
25.03.87 Bulletin 87/13

(45) Mention de la délivrance du brevet:
02.05.90 Bulletin 90/18

(84) Etats contractants désignés:
AT BE CH DE FR GB IT LI LU NL SE

(56) Documents cités:
EP-A-0 057 500
EP-A-0 119 368
DE-A-3 018 854
DE-A-3 333 551
US-A-3 923 660

(73) Titulaire: SONNAY, Gilbert
6, chemin des Epinoux
CH-1052 Le Mont-sur-Lausanne (CH)

(72) Inventeur: SIMONI, Jean-Yves
Buissons 11
CH-2300 La Chaux-de-Fonds (CH)

(74) Mandataire: Nithardt, Roland
CABINET ROLAND NITHARDT Attn: Cabinet
MOSER & CIE Rue Edouard Verdan 15
CH-1400 Yverdon-les-Bains (CH)

Courier Press, Leamington Spa, England.

## Description

La présente invention concerne un dispositif de conditionnement de l'eau contenant du carbonate de calcium, ce traitement consistant à faire circuler cette eau selon une trajectoire hélicoïdale à travers un champ magnétique créé par une colonne d'aimants permanents, séparés les uns des autres par des plots intercalaires et superposés de telle manière que leurs pôles adjacents soient de même nature, ces aimants étant logés à l'intérieur d'un premier élément tubulaire, en un materiau électriquement isolant, ce dispositif comportant un second élément tubulaire coaxial au premier, agencé de manière à ménager un espace annulaire entre le premier et le second élément tubulaire, ce dispositif comportant également deux embouts respectivement montés aux deux extrémités des deux éléments tubulaires, agencés de telle manière qu'ils maintiennent simultanément ces deux éléments tubulaires dans leurs positions respectives, ces embouts comportant un alésage central, l'embout de sortie comportant au moins une ouverture latérale faisant communiquer l'alésage central avec ledit espace annulaire et l'embout d'entrée comportant deux ouvertures latérales débouchant sensiblement tangentiellement dans l'alésage central.

La présente invention concerne également une installation réalisée à l'aide de combinaisons diverses de plusieurs de ces dispositifs.

On connaît déjà divers dispositifs de ce type ayant tous pour but d'effectuer un traitement de l'eau, évitant ainsi un dépôt de tartre sur les parois intérieures des conduits et des réservoirs ou sur les résistances chauffantes des générateurs d'eau chaude.

Un de ces dispositifs est décrit par la demande de brevet européen publiée sous le numéro 119 368. Une colonne d'aimants permanents séparés par des plots en fer doux, est entourée d'une chemise en matériau isolant, placée à l'intérieur d'un élément tubulaire métallique. Une chambre d'entrée est pourvue de deux ouvertures tangentielles pour permettre l'écoulement de l'eau à travers l'espace annulaire situé entre la chemise et l'élément tubulaire.

L'une des conditions à remplir pour que le dispositif fonctionne efficacement, est que l'eau circule autour de la colonne d'aimants permanents, en suivant une trajectoire hélicoïdale à faible pas, afin de permettre aux aimants d'agir (forces de Lorentz) sur les ions en solution, et des les concentrer dans les zones toriques correspondant à leurs charges.

Les colloïdes de carbonate de calcium, de charge positives, se recouvriront d'ions négatifs dans les zones ad hoc, et leurs répulsions électrostatiques s'affaibliront au point qu'ils pourront s'agglomérer, et former des germes de cristallisation dans la veine fluide, sans se déposer sur les parois des canalisations.

Certains systèmes connus ont recouru à des artifices du type chicanes pour provoquer l'écoulement hélicoïdal. Un de ces systèmes est décrit par le brevet américain No. 3,923,660. Plusieurs colonnes d'aimants permanents sont entourées par un organe de guidage hélicoïdal disposé dans l'espace annulaire entourant les colonnes d'aimants, afin de forcer l'eau traversant à conditionner à suivre une trajectoire hélicoïdale.

Un inconvénient des systèmes connus est qu'ils sont de construction compliquée de sorte que les frais d'assemblage sont relativement élevés.

Un autre inconvénient des systèmes ne comportant pas d'organe de guidage hélicoïdal est que la trajectoire de l'écoulement dépend fortement du débit. Les caractéristiques de l'écoulement ne sont pas les mêmes à faible et à fort régime.

Or, l'efficacité des systèmes de l'art antérieur est strictement liée au régime d'utilisation, c'est-à-dire au débit de l'eau circulant dans les conduits qui est, bien entendu, extrêmement variable dans les installations domestiques. De ce fait, l'efficacité des systèmes connus est souvent aléatoire.

Par ailleurs, on sait qu'une impureté quelconque fixée sur une paroi composée de fer métallique en contact avec de l'eau, consitue une zone anodique qui dissout le métal et fait place à l'hydroxyde de fer II, $Fe(OH)_2$ en présence d'eau désaérée, et également à de l'hydroxyde de fer III $Fe(OH)_3$, en présence d'une eau aérée. Sous certaines conditions, le $Fe(OH)_2$ peut se transformer en $Fe_3O_4$, ou magnétite, qui constitue un oxyde formant une couche très résistante.

En empêchant le $CaCO_3$ de s'incruster sur le métal on empêche la corrosion de s'installer, car la surface intérieure des canalisations reste propre. En conséquence, le conditionneur magnétique agit de manière indirecte sur la corrosion.

On connaît également, d'après le diagramme de Pourbaix, décrit par G. Poirier, dans le "Précis de protection cathodique S.T.E.C.P.A." (Paris, 1962) aux pages 30 à 33, les zones de corrosion et les zones de passivation ou d'immunité du fer dans l'eau.

On sait qu'il est particulièrement intéressant de se trouver dans les conditions de passivation, c'est-à-dire dans la zone de formation des oxydes protecteurs ($Fe_2O_3$), si l'on souhaite préserver les canalisations de la rouille.

La présente invention se propose de pallier ces inconvénients en réalisant un dispositif dont l'efficacité reste sensiblement constante, indépendante du régime d'écoulement de l'eau dans les conduits des installations domestiques ou industrielles, et qui permet de réunir les conditions requises pour se placer dans une zone de passivation.

Dans ce but, le dispositif selon l'invention, tel que mentionné en préambule, est caractérisé en ce que les projections sur un plan perpendiculaire à l'axe du dispositif des axes des deux ouvertures latérales de l'embout d'entrée forment entre elles un angle compris entre 60° et 80°, et en ce que l'axe de l'une des ouvertures latérales de l'embout d'entrée forme un angle au moins approximativement égal à 90° par rapport à l'axe du dispositif, alors que l'axe de l'autre ouverture forme avec l'axe du dispositif un angle inférieur à 90°.

Afin de réunir les conditions requises pour se placer dans une zone de passivation, les parois latérales de l'espace annulaire ménagé entre le premier et le second élément tubulaire sont avantageusement isolées par des matériaux diélectriques.

Selon une forme de réalisation particulière, le second élément tubulaire est constitué par un tronçon de tube réalisé en un matériau diélectrique.

Selon un mode de réalisation préféré, le second élément tubulaire est constitué par un tronçon de tube métallique revêtu intérieurement d'une gaine réalisée en un matériau diélectrique.

Le matériau diélectrique utilisé est avantageusement du polypropylène ou du polytétrafluoréthylène.

Des expériences effectuées avec différents conditionneurs tels que définis ci-dessus, mais ayant des dimensions différentes, ont montré que chacun de ces conditionneurs présente une plage de fonctionnement optimale en ce qui concerne l'obtention de conditions passivantes pour les canalisations disposées en aval. On a en particulier constaté que la vitesse de circulation de l'eau dans l'enceinte annulaire définie par lesdits premier et second éléments tubulaires est déterminante pour atteindre ces conditions passivantes. Or, dans les installations domestiques, comme d'ailleurs dans certaines installations industrielles, le débit, et par conséquent la vitesse de circulation dans les conditionneurs, varie en fonction des besoins de l'utilisateur.

Afin d'atteindre à tout moment les conditions passivantes pour les canalisations disposées en aval, quel que soit le débit momentané de l'eau dans les conduites, on peut réaliser une installation composite qui peut comporter au moins deux des dispositifs de conditionnement précédents, agencés pour traiter des gammes de débits respectives différentes, la gamme de débits du premier des deux dispositifs étant plus élevée que celle du deuxième, ces deux dispositifs étant montés en série et reliés par l'intermédiaire d'une vanne de commande agencée pour diriger au moins une partie du débit sortant du premier dispositif vers une sortie de l'installation sans passer à travers le deuxième dispositif si le débit sortant du premier dispositif est supérieur à une valeur seuil déterminée.

Selon un mode de réalisation préféré, les deux dispositifs de conditionnement de l'eau sont montés dans le prolongement l'un de l'autre, à l'intérieur d'une même enceinte tubulaire, et ladite vanne est disposée entre ces deux dispositifs.

Chacun des dispositifs de conditionnement comporte un premier élément tubulaire et un second élément tubulaire. Le second élément tubulaire du premier dispositif est avantageusement constitué par ladite enceinte extérieure de l'installation et le second élément tubulaire du second dispositif est de préférence monté coaxialement à l'intérieur de cette enceinte, de manière à définir avec elle un second espace annulaire de section sensiblement égale à celle de l'espace annulaire ménagé entre les deux éléments tubulaires du premier dispositif.

La vanne disposée entre deux éléments successifs montés dans le prolongement l'un de l'autre, comporte de préférence un élément central mobile axialement à l'intérieur d'une pièce fixe solidaire de l'embout d'entrée du dispositif suivant, et un organe ressort agencé pour pousser l'élément central dans une première position lorsque le débit de l'eau à travers le dispositif précédent est inférieur à ladite valeur seuil déterminée et pour se comprimer et permettre le déplacement de l'élément central dans une seconde position lorsque le débit de l'eau à travers le dispositif précédent est supérieur à ladite valeur seuil déterminée.

Selon une forme de réalisation particulière, l'organe ressort comporte un ressort spiral.

Selon une autre forme de réalisation avantageuse, l'organe ressort comporte un système pneumatique constitué par une chambre annulaire hermétique ménagée entre l'élément mobile et la pièce fixe, cette chambre étant agencée pour recevoir un gaz sous pression.

L'installation peut comporter avantageusement plusieurs, en particulier trois dispositifs montés en série, disposés les uns dans le prolongement des autres, coaxialement à l'intérieur de l'enceinte extérieure, chacun de ces dispositifs étant conçu pour que le débit d'eau qui le traverse effectivement et le débit circulant dans les espaces annulaires qui l'entourent aient une somme sensiblement égale au débit mesuré à l'entrée du premier dispositif ayant la capacité la plus grande.

Selon un mode de réalisation avantageux, l'installation comporte un dispositif de conditionnement de l'eau et un espace annulaire extérieur entourant latéralement ledit dispositif de conditionnement et reliant l'embout d'entrée à l'embout de sortie pour le passage d'un débit d'eau autour du dispositif de conditionnement, et l'embout de sortie comprend un organe mobile agencé pour pouvoir se déplacer entre une position de fermeture dans laquelle l'espace annulaire extérieur est obturé, et une position d'ouverture dans laquelle ni cet espace, ni le dispositif de conditionnement n'est obturé.

Selon une forme de réalisation particulière, l'embout de sortie comporte avantageusement un siège conique et l'organe mobile est constitué par un clapet équipé d'un embout conique adapté audit siège, d'un canal central communiquant avec ledit dispositif de conditionnement par des ouvertures latérales, et d'au moins une gorge axiale disposée à sa périphérie en aval de l'embout conique.

La présente invention et ses principales caractéristiques seront mieux comprises en référence à la description d'exemples de réalisation et du dessin annexé dans lequel:

La figure 1 représente une vue en coupe longitudinale d'une forme de réalisation préférée du dispositif selon l'invention,

La figure 2 représente une vue partielle en élévation de l'embout d'entrée du dispositif selon l'invention,

La figure 3 représente une vue de dessous de l'embout d'entrée de la figure 2,

La figure 4 représente une vue partielle en élévation de l'embout de sortie du dispositif de la figure 1,

La figure 5 représente une vue de dessus de l'embout de sortie illustré par la figure 4,

La figure 6 représente schématiquement un premier mode de réalisation d'une installation réalisée à l'aide des dispositifs selon les figures 1 à 5,

La figure 7 représente le mode de réalisation préféré d'une telle installation,

La figure 8 représente une vue de détail agrandie d'une vanne de commande montée entre deux conditionneurs adjacents de l'installation,

La figure 9 représente une vue de détail d'une variante de réalisation de la vanne selon la figure 8, et

La figure 10 représente une vue en coupe axiale d'une autre forme de réalisation de l'installation selon l'invention.

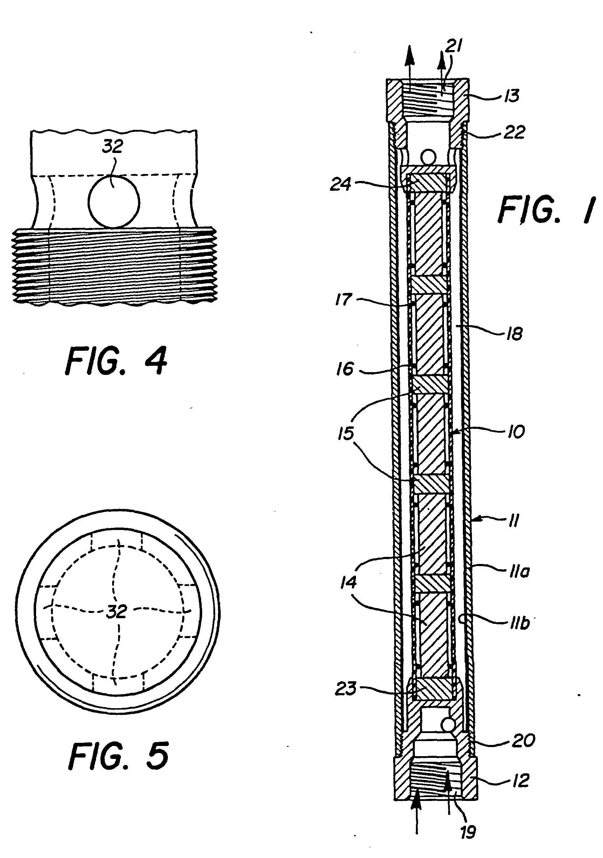

En référence à la figure 1, le dispositif illustré comporte essentiellement un premier élément tubulaire intérieur 10, un second élément tubulaire extérieur 11, monté coaxialement par rapport à l'élément tubulaire intérieur 10, un embout d'entrée 12 et un embout de sortie 13. L'élément tubulaire intérieur 10 est constitué par un tronçon de tube cylindrique réalisé de préférence en matière synthétique, contenant une série d'aimants permanents 14 superposés, par exemple de forme cylindrique, séparés par des plots intercalaires 15, par exemple en fer doux, et retenus latéralement à l'intérieur du tube par deux joints toriques 16 et 17. On notera que l'élément tubulaire intérieur 10 présente une paroi extérieure parfaitement lisse, exempte de toutes protubérances ou chicanes susceptibles d'engendrer des turbulences incontrôlées.

L'élément tubulaire extérieur 11 a un diamètre supérieur à celui de l'élément tubulaire intérieur 10 et est disposé autour de ce dernier de telle manière qu'un espace annulaire 18 soit ménagé entre la paroi extérieure de l'élément tubulaire intérieur 10 et la paroi intérieure de l'élément tubulaire extérieur 11. La paroi intérieure de l'élément tubulaire extérieur 11 est également lisse et ne présente ni protubérances ni chicanes, pour les mêmes raisons que celles évoquées ci-dessus.

Le premier élément tubulaire 10 est réalisé en un matériau diélectrique tel que par exemple du polypropylène ou du polytétrafluoréthylène ou tout autre matériau diélectrique similaire. L'élément tubulaire extérieur 11 se compose avantageusement d'un tronçon extérieur 11a de tube métallique réalisé par exemple en acier inoxydable et d'une gaine intérieure 11b réalisée en un matériau diélectrique tel que par exemple le polypropylène ou le polytétrafluoréthylène ou tout autre matériau diélectrique similaire. La réalisation du tube extérieur 11a par exemple en acier inoxydable permet d'assurer un blindage contre les influences magnétiques extérieures et par conséquent de protéger les aimants permanents 14 de la colonne intérieure. Dans certaines réalisations on pourrait envisager d'utiliser un élément tubulaire extérieur 11 entièrement en matériau diélectrique.

L'embout d'entrée 12 et l'embout de sortie 13 ont dans ce cas une forme générale identique. L'embout d'entrée comporte un alésage central 19 et un premier rétrécissement 20 dont la paroi extérieure est filetée pour permettre la fixation de l'élément tubulaire extérieur 11 dont le tronçon d'extrémite présente une zone intérieure filetée. De façon similaire, l'embout de sortie 13 comporte également un alésage central 21 et une zone de section rétrécie 22, filetée pour permettre la fixation par vissage de l'autre extrémité de l'élément tubulaire extérieur 11. L'embout d'entrée 12 comporte à son extrémité orientée vers l'intérieur du dispositif une rainure circulaire 23 destinée à la mise en place de l'extrémité de l'élément tubulaire intérieur 10. De façon similaire l'embout de sortie 13 comporte à son extrémité orientée vers l'intérieur du dispositif une rainure annulaire 24 conçue pour recevoir l'autre extrémité de l'élément tubulaire intérieur 10. Lorsque les deux embouts d'entrée et de sortie sont vissés sur l'élément tubulaire extérieur, l'élément tubulaire intérieur est maintenu en position grâce auxdites rainures 23 et 24.

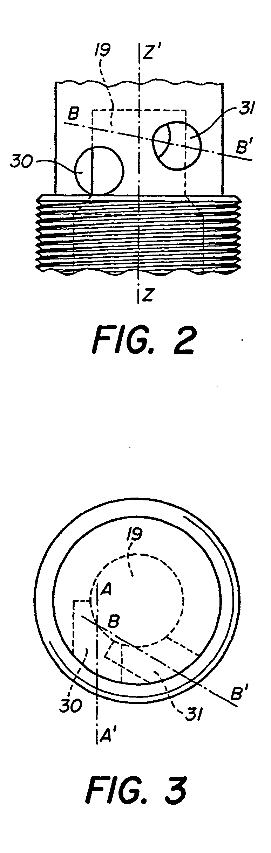

L'embout d'entrée illustré par les figures 2 et 3 comporte deux ouvertures latérales 30 et 31 destinées à faire communiquer l'alésage central 19 avec l'espace annulaire 18. Ces deux ouvertures qui débouchent sensiblement tangentiellement dans l'alésage central 19 sont décalées angulairement en projection sur un même plan horizontal et en hauteur, le dispositif étant monté verticalement. L'axe AA' forme avec l'axe ZZ' du dispositif un angle sensiblement égale à 90°. En revanche l'axe BB' forme avec l'axe ZZ' du dispositif un angle inférieur à 90°. Cette construction permet, comme mentionné précédemment, d'engendrer une circulation en spirale de faible pas autour de la colonne des aimants, et en particulier d'engendrer une circulation de l'eau selon une trajectoire hélicoïdale qui forme avec l'axe ZZ' un angle compris entre 5° et 35° et de préférence voisin de 15°.

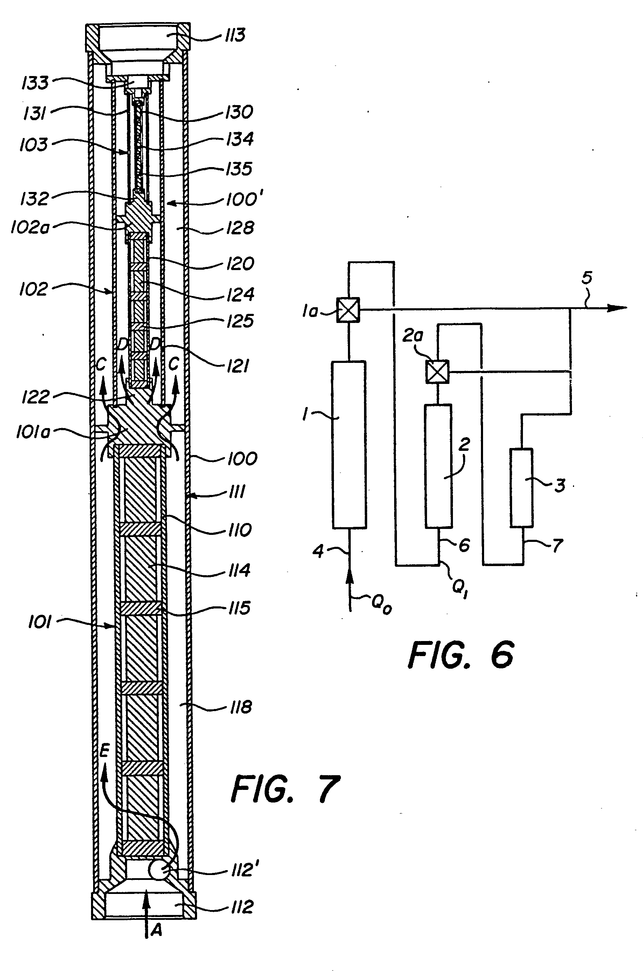

L'embout de sortie illustré par les figures 4 et 5, comporte avantageusement trois ou quatre ouvertures 32 régulièrement réparties autour de la périphérie d'une section de diamètre rétréci. Cette distribution permet une évacuation rapide et efficace de l'eau ayant traversée le dispositif.

Divers essais ont permis de constater que si l'on traite de l'eau par un dispositif de ce type, c'est-à-dire un conditionneur magnétique dont la chambre de traitement est isolée par des diélectriques de telle manière que l'eau et ses composants, c'est-à-dire les colloïdes et les ions qu'elle véhicule, ne soient pas en contact avec un métal lorsqu'elle subit l'influence des champs magnétiques, on obtient des conditions passivantes pour les canalisations disposées en aval. Les conséquences directes en sont une bonne protection de ces canalisations contre la corrosion, protection qui, selon les essais, se prolonge pendant plusieurs jours après l'arrêt de toute circulation d'eau dans les canalisations.

La figure 6 illustre une forme de réalisation particulière de l'installation selon l'invention, comportant un nombre quelconque, par exemple trois dispositifs 1, 2 et 3 pour le traitement de l'eau contenant du carbonate de calcium, identiques à ceux représentés par les figures 1 à 5. A ces dispositifs sont associées des vannes 1a et 2a qui peuvent être actionnées manuellement, ou commandées automatiquement selon un principe quelconque connu en soi, en fonction du détbi Qo de l'eau qui circule dans le conduit d'entrée 4. Ce débit peut par exemple être mesuré, et l'installation peut être équipée d'une unité centrale agencée pour commander la vanne 1a en fonction de ce débit.

Chacun des trois dispositifs 1, 2 et 3 est dimensionné pour travailler de façon optimale dans une plage de débit fixé. A titre d'exemple le dispositif ou conditionneur 1 est conçu pour travailler de façon optimale pour des débits supérieurs à 30 l/min, le dispositif 2 est conçu pour travailler de façon optimale pour des débits compris entre 15 et 30 l/min, et le dispositif 3 est conçu pour travailler pour des débits inférieurs à 15 l/min.

Les vannes 1a et 2a sont des vannes à une voie d'entrée et à deux voies de sortie. Lorsque le débit d'entrée Qo est supérieur à 30 l/min, l'eau traitée par le conditionneur 1 est directement dirigée par la vanne 1a vers le conduit de sortie 5.

En revanche, lorsque le débit d'entrée Qo est inférieur à 30 l/min la vanne 1a sélectionne l'autre voie de sortie et dirige l'eau prétraitée vers l'entrée 6 du second conditionneur 2.

Si le débit Q1 déterminé à cet endroit se situe dans la plage de fonctionnement optimal du second conditionneur, c'est-à-dire est compris entre 15 et 30 l/min, l'eau est directement dirigée par la vanne 2a vers la sortie 5 de l'installation.

Si le débit Q1 est inférieur à 15 l/min, la vanne 2a dirige l'eau vers l'entrée 7 du troisième conditionneur 3, où elle est traitée avant d'être transmise vers la sortie 5 de l'installation.

Il est évident qu'un tel conditionnement par égages de traitement successifs pourrait être généralisé. L'installation pourrait comporter un nombre plus important de conditionneurs travaillant chacun de façon optimale dans une plage de débit nettement délimitée.

La figure 7 illustre une forme de réalisation particulièrement avantageuse d'une autre installation à trois étages de traitement de l'eau. Cette installation comporte une enceinte extérieure 100 contenant les trois dispositifs de traitement 101, 102 et 103 et deux vannes de commande 101a et 102a. Les trois dispositifs sont superposés et coaxiaux.

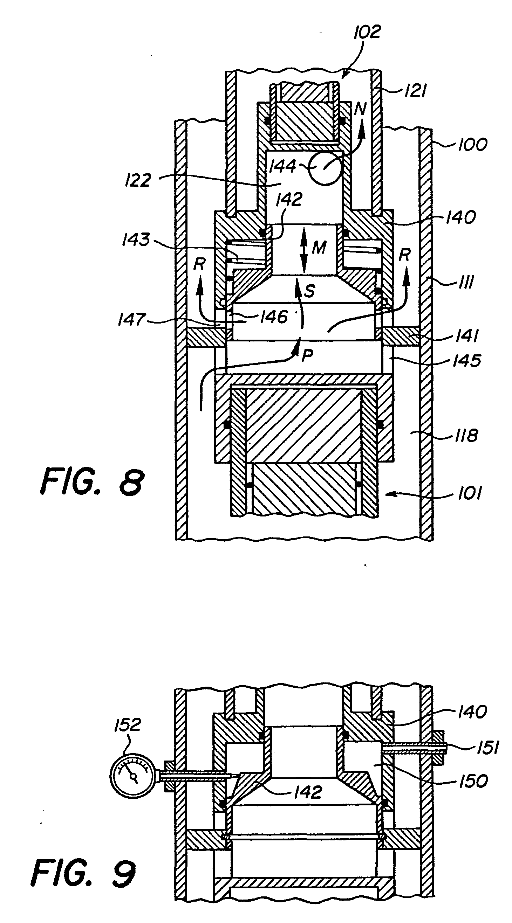

Le dispositif de conditionnement 101 comporte un premier élément tubulaire intérieur 110 contenant une colonne d'aimants 14 séparés par des plots intercalaires 115 par exemple en fer doux, et un second élément tubulaire extérieur 111, qui est constitué dans ce cas par les parois de l'enceinte extérieure 100. L'embout d'entrée 112 est identique à l'embout d'entrée 12 du dispositif représenté par la fig. 1. L'embout de sortie est incorporé à la vanne 101a qui sera décrite plus en détail par la suite, en référence aux fig. 8 et 9.

Le dispositif de conditionnement 102 comporte comme précédemment un premier élément tubulaire intérieur 120, contenant une colonne d'aimants 124 séparés par des plots intercalaires 125 par exemple en fer doux, et un second élément tubulaire extérieur 121 qui est constitué dans ce cas par les parois d'une enceinte intérieure 100'. L'embout d'entrée 122 est incorporé à la vanne 101a et l'embout de sortie est incorporé à la vanne 102a.

Le dispositif de conditionnement 103 comporte également un premier élément tubulaire intérieur 130 contenant une colonne d'aimants 134 séparés par des plots intercalaires 135 par exemple en fer doux, et un second élément tubulaire extérieur 131. L'embout d'entrée 132 est incorporé à la vanne 102a et l'embout de sortie 133 est incorporé à l'embout de sortie général 113 de l'installation. Cet embout de sortie est identique à l'embout de sortie 13 illustré par la fig. 1.

Dans la pratique le dispositif fonctionne de la même manière que le dispositif illustré par la fig. 6. En effet, l'eau qui pénètre par l'embout 112 dans le sens de la flèche A, traverse les orifices 112' ménagés dans cet embout et pénètre sous forme d'un flux hélicoïdal illustré par la flèche E à l'intérieur de l'enceinte annulaire 118. Si le débit initial est suffisamment élevé pour que la vitesse de circulation de l'eau corresponde au fonctionnement optimal du dispositif 101, la vanne 101a reste ouverte et permet à l'eau de circuler à travers le second espace annulaire 128 ménagé entre l'enceinte extérieure 100 et l'enceinte intérieure 100', dans le sens des flèches C et de traverses le deuxième dispositif 102 dans le sens des flèches D.

En revanche, si le débit est inférieur au seuil de fonctionnement optimal du dispositif 101, par exemple à 30 l/min, la vanne 101a est fermée et empêche l'évacuation de l'eau prétraitée par le dispositif 101 à travers l'espace annulaire 128. L'eau est dans ce cas forcée de traverser le conditionneur 102 dans le sens des flèches D. La vanne 102a agit de la même manière entre les conditionneurs 102 et 103.

La figure 8 illustre une forme de réalisation particulièrement avantageuse de la vanne 101a (ou de la vanne 102a). Cette vanne se compose essentiellement d'un élément fixe 140 rendu solidaire de l'élément tubulaire extérieur 111 par une bague de liaison 141 et d'un élément 142 monté à l'intérieur de la pièce fixe 140 et mobile axialement selon la double flèche M. Un ressort 143 est monté entre la pièce 140 et l'élément mobile 142.

La pièce fixe 140 comprend l'embout 122 d'entrée du second étage de conditionneur c'est-à-dire du dispositif 102. Cet embout 122 comprend deux orifices latéraux 144 qui permettent l'écoulement de l'eau dans le sens de la flèche N, sous forme d'un flux hélicoïdal à l'intérieur de l'espace annulaire correspondant. Cette pièce fixe 140 comporte également l'embout de sortie du conditionneur 101 pourvu des ouvertures latérales 145 permettant l'écoulement de l'eau provenant de l'espace annulaire 118, dans le sens de la flèche E.

Dans l'état représenté par la fig. 8, la pression exercée par l'eau circulant dans le sens de la flèche E est suffisamment forte pour comprimer le ressort 143. De ce fait, l'élément mobile 143 est repoussé vers le haut, ce qui a pour effet d'amener les ouvertures radiales 146 de l'élément mobile 142 en face d'ouvertures latérales 147 ménagées dans la pièce fixe 140. De ce fait, une partie du flux illustré par la flèche P peut s'évacuer dans le sens des flèches R à travers les ouvertures 146 et 147 dans la chambre annulaire définie par la paroi intérieure de l'enceinte extérieure 100 et la paroi extérieure du second élément tubulaire 121 du conditionneur 102. Une autre partie du flux illustré par la flèche P s'évacue dans le sens de la flèche S vers l'intérieur du second conditionneur 102.

L'exemple illustré correspond à un débit initial supérieur au seuil mentionné précédemment, qui est par exemple de 30 l/min. La pression du ressort est calculée de telle façon que la vanne s'ouvre, étant donné que l'eau a déjà été traitée par le conditionneur 101. Si le débit initial tombe en dessous de ce seuil, la pression exercée par le ressort 143 abaisse l'élément mobile 142, ce qui a pour conséquence de fermer la vanne et d'imposer au flux illustré par la flèhce P de circuler dans le sens de la flèche S, les ouvertures 147 étant obturées et empêchant le passage de l'eau dans le sens des flèches R.

La vanne illustrée par la fig. 9 est du type pneumatique. La chambre 150 ménagée entre la pièce fixe 140 et l'élément mobile 142 est alimentée à travers un conduit 151 en gaz sous pression dont la pression est contrôlée par un instrument de mesure, par exemple un manomètre 152. Cette chambre à pression réglable joue le même rôle que celui exercé par le ressort 143 illustré par la fig. 9. L'avantage du système pneumatique est de permettre une plus grande souplesse du fait que la pression peut être réglée très simplement et sa valeur peut être contrôlée par lecture directe.

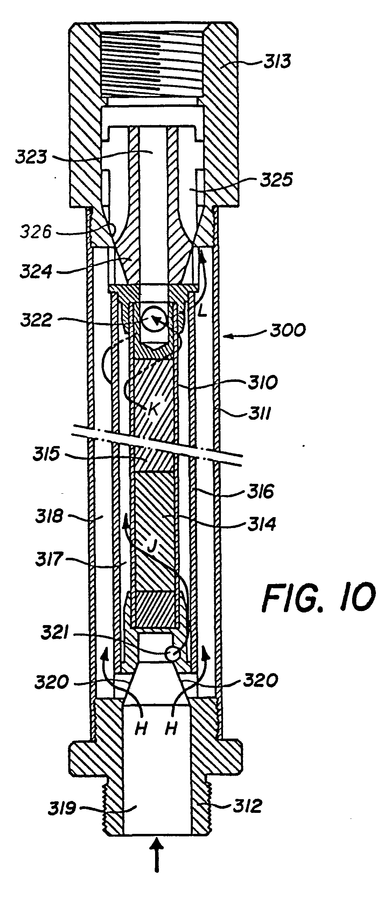

Le conditionneur 30 illustré par la fig. 10 comporte comme le précédent, un premier élément tubulaire intérieur 310, un second élément tubulaire 311, monté coaxialement à l'extérieur du premier élément tubulaire, un embout d'entrée 312 et un embout de sortie 313.

L'élément tubulaire intérieur 310 contient une série d'aimants permanents 314 superposés, séparés par des plots intercalaires 315. Entre les deux éléments tubulaires 310 et 311 est disposé un troisième élément tubulaire intermédiaire 316 qui définit avec les deux autres éléments deux espaces annulaires 317 et 318 destinés au passage de l'eau à conditionner.

L'embout d'entrée 312 comporte un alésage central 319 et une ou plusieurs ouvertures 320 qui permettent l'écoulement de l'eau dans l'espace annulaire 318, dans le sens des flèches H, et des ouvertures latérales 321 qui sont disposées et orientées comme les ouvertures 30 et 31 illustrées par les fig. 2 et 3, pour permettre l'écoulement hélicoïdal de l'eau dans l'espace annulaire 317, dans le sens de la flèche J. Les ouvertures 320 peuvent aussi être agencées de la même manière.

En cas de faible débit, un clapet mobile 324 ayant à sa base un embout conique s'appliquant, sous l'effet du poids du clapet, sur un siège conique ménagé dans l'embout de sortie 313, obture l'espace annulaire extérieur 318 et l'eau conditionnée au cours de sa traversée de l'espace annulaire 317 s'écoule par des ouvertures latérales 322, dans le canal central 323 du clapet mobile 324, dans le sens de la flèche K. En cas de fort débit, le clapet mobile 324 se soulève, sous l'effet de la pression, et une partie de l'eau peut s'écouler à partir de l'espace annulaire 318 dans le sens de la flèche L, par des gorges axiales 325 du clapet mobile.

De ce fait, quel que soit le débit, l'eau circule selon une trajectoire hélicoïdale autour de la colonne d'aimants. La seule pièce mobile est le clapet mobile qui peut prendre appui sur son siège conique ou se soulever plus ou moins en fonction de la pression exercée par l'eau. Afin d'obtenir une meilleure sécurité de fonctionnement, ce clapet mobile peut être équipé d'un système de rappel réglable du type à ressort ou similaire. Le système est parfaitement fiable et ne comporte aucune pièce délicate.

La présente invention n'est pas limitée aux formes de réalisation décrites mais peut subir différentes modifications et se présenter sous diverses variantes évidentes pour l'homme de l'art. En particulier, on peut imaginer que les deux canaux cylindriques dits "à grande section" et à "petite section" soient remplacés par des canaux ayant une forme telle que, par exemple, constituée par des hélices, des tubes enroulés et superposés, des pièces moulées, injectées ou similaires ou par des canaux doubles, triples ou multiples. De même, le clapet mobile peut adopter une toute autre forme que celle du type conique ou cylindrique. Les gorges axiales 325, ménagées à sa périphérie, sont au nombre de quatre dans les exemples illustrés. Toutefois leur nombre et leur disposition peuvent être différents en fonction du débit d'évacuation désiré.

**Revendications**

1. Dispositif de conditionnement de l'eau contenant du carbonate de calcium, ce conditionnement consistant à faire circuler cette eau selon une trajectoire hélicoïdale, à travers un champ magnétique créé par une colonne d'aimants permanents, séparés les uns des autres par des plots intercalaires et superposés de telle manière que leurs pôles adjacents soient de même nature, ces aimants étant logés à l'intérieur d'un premier élément tubulaire en un matériau électriquement isolant, ce dispositif comportant un second élément tubulaire coaxial au premier agencé de manière à ménager un espace annulaire entre le premier et le second élément tubulaire, ce dispositif comportant également deux embouts (12, 13) respectivement montés aux deux extrémités des deux éléments tubulaires (10, 11), agencés de telle manière qu'ils maintiennent simultanément ces deux éléments tubulaires dans leurs positions respectives, ces embouts comportant un alésage central (19, 21), l'embout de sortie comportant au moins une ouverture latérale (30) faisant communiquer l'alésage central avec ledit espace annulaire (18), et l'embout d'entrée (12) comportant deux ouvertures latérales (30, 31) débouchant sensiblement tangentiellement dans l'alésage central (19), caractérisé en ce que les projections sur un plan perpendiculaire à l'axe ZZ' de ce dispositif, des axes AA', BB' des deux ouvertures latérales (30, 31) de l'embout d'entrée (12) forment entre elles un angle compris entre 60° et 80° et en ce que l'axe AA' de l'une (30) des ouvertures latérales de l'embout d'entrée (12) forme un angle au moins approximativement égal à 90° par rapport à l'axe ZZ' du dispositif, alors que l'axe BB' de l'autre (31) ouverture forme avec l'axe ZZ' du dispositif un angle inférieur à 90°.

2. Dispositif selon la revendication 1, caractérisé en ce que les parois latérales de l'espace annulaire ménagé entre le premier (10) et le second élément tubulaire (11) sont isolées par des matériaux diélectriques.

3. Dispositif selon la revendication 2, caractérisé en ce que ledit second élément tubulaire (11) est constitué par un tronçon de tube réalisé en un matériau diélectrique.

4. Dispositif selon la revendication 2, caractérisé en ce que ledit second élément tubulaire est constitué par un tronçon de tube métallique (11a) revêtu intérieurement par une gaine (11b) réalisée en un matériau diélectrique.

5. Dispositif selon la revendication 2, caractérisé en ce que le matériau diélectrique est du polypropylène ou du polytétrafluoréthylène.

6. Installation de conditionnement de l'eau, caractérisée en ce qu'elle comporte au moins deux desdits dispositifs de conditionnement de l'eau (1, 2, 3; 101, 102, 103) selon l'une quelconque des revendications 1 à 5, agencés pour traiter des gammes de débits respectives différentes, la gamme de débits du premier des deux dispositifs étant plus élevée que celle du deuxième, et en ce que des deux dispositifs sont montés en série et sont reliés par l'intermédiaire d'une vanne de commande (1a, 2a, 101a, 102a) agencée pour diriger au moins une partie du débit sortant du premier dispositif vers une sortie (113) de l'installation sans passer à travers le deuxième dispositif si le débit sortant du premier dispositif est supérieur à une valeur seuil déterminée.

7. Installation selon la revendication 6, caractérisée en ce que les deux dispositifs (101, 102) de conditionnement de l'eau sont montés dans le prolongement l'un de l'autre à l'intérieur d'une même enceinte tubulaire (100) et ladite vanne (101a) est disposée entre ces deux dispositifs.

8. Installation selon la revendication 7, dans laquelle le premier dispositif (101) comporte un premier élément tubulaire (110) et un second élément tubulaire (111), et dans lequel le second dispositif (102) comporte également un premier élément tubulaire (120) et un second élément tubulaire (121), caractérisée en ce que le second élément tubulaire (111) du premier dispositif est constitué par ladite enceinte extérieure (100) de l'installation, et en ce que le second élément tubulaire (121) du second dispositif (102) est monté coaxialement à l'intérieur de cette enceinte (100), de manière à définir avec elle un second espace annulaire (128) de section sensiblement égale à celle de l'espace annulaire (118) ménagé entre les deux éléments tubulaires (110 et 111) du premier dispositif (101).

9. Installation selon la revendication 7, caractérisée en ce que la vanne (101a ou 102a) comporte un élément central (142) mobile axialement à l'intérieur d'une pièce fixe (140), solidaire de l'embout d'entrée du dispositif suivant (par exemple 101) et un organe ressort agencé pour pousser l'élément central (142) dans une première position lorsque le débit de l'eau à travers le dispositif précédent (par exemple 101) est inférieur à ladite valeur seuil déterminée, et pour se comprimer et permettre le déplacement de l'élément central (142) dans une seconde position lorsque le débit de l'eau à travers le dispositif précédent est supérieur à ladite valeur seuil déterminée.

10. Installation selon la revendication 9, caractérisée en ce que l'organe ressort comporte un ressort spiral.

11. Installation selon la revendication 9, caractérisée en ce que l'organe ressort comporte un système pneumatique constitué par une chambre annulaire hermétique ménagée entre l'élément mobile (142) et la pièce fixe (140), cette chambre étant agencée pour recevoir un gaz sous pression.

12. Installation selon la revendication 7 comportant plusieurs dispositifs montés en série l'un dans le prolongement de l'autre, disposés coaxialement à l'intérieur de l'enceinte extérieure (100), chaque dispositif étant conçu pour que le débit d'eau qui l'a traversé et le débit d'eau circulant dans les espaces annulaires qui l'entourent, aient une somme sensiblement égale au débit à l'entrée du premier dispositif.

13. Installation de conditionnement de l'eau comportant un dispositif de conditionnement de l'eau selon la revendication 1, caractérisée en ce qu'elle comporte un espace annulaire extérieur (318) entourant latéralement ledit dispositif de conditionnement et faisant communiquer l'embout d'entrée avec l'embout de sortie pour permettre le passage d'une partie du débit d'eau autour du dispositif de conditionnement, et en ce que l'embout de sortie (313) comprend un organe mobile (324) agencé pour pouvoir se déplacer entre une position de fermeture dans laquelle l'espace annulaire extérieur (318) est obturé et une position d'ouverture dans laquelle ni cet espace, ni le dispositif de conditionnement n'est obturé.

14. Installation selon la revendication 13, caractérisée en ce que l'embout de sortie (313) comporte un siège conique et en ce que l'organe mobile (324) est constitué par un clapet équipé d'un embout conique adapté audit siège, d'un canal central (323) communiquant avec le dispositif de conditionnement par des ouvertures latérales (322), et d'au moins une gorge axiale (325) disposée à sa périphérie en aval de l'embout conique.

## Patentansprüche

1. Gerät zur Behandlung von kalziumcarbonathaltigem Wasser, wobei diese Behandlung darin besteht, dieses Wasser auf einer wendelförmigen Bahn durch ein von einer Kolonne von Permanentmagneten gebildetes magnetisches Feld zirkulieren zu lassen, wobei diese Magnete durch Zwischenstücke voneinander getrennt und so übereinander gesetzt sind, daß ihre benachbarten Pole gleichartig sind, wobei diese Magnete im Inneren eines ersten rohrförmigen Bauteiles aus elektrisch isolierenden Werkstoff angeordnet sind und das Gerät auch ein zweites zum ersten koaxial liegendes rohrförmiges Bauteil aufweist, das so angeordnet ist, daß zwischen dem ersten und dem zweiten rohrförmigen Bauteil ein ringförmiger Raum entsteht, wobei dieses Gerät noch zwei jeweils an den zwei Enden der zwei rohrförmigen Bauteile (10, 11) montierte Stutzen (12, 13) aufweist, die so angeordnet sind, daß sie gleichzeitig die zwei rohrförmigen Bauteile in ihrer jeweiligen Lage halten, wobei diese Stutzen eine Zentralbohrung (19, 21) aufweisen und der Austrittsstutzen weist mindestens eine seitliche Bohrung (30) aufweist, um eine Verbindung zwischen der Zentralbohrung und dem Ringraum (18) zu schaffen und der Eintrittsstutzen (12) zwei seitliche Bohrungen (30, 31) aufweist, welche etwa tangential in die Zentralbohrung (19) münden, dadurch gekennzeichnet, daß in der Projektion auf eine zur Achse ZZ' dieses Gerätes senkrechte Ebene, die Achsen AA', BB' der zwei seitlichen Öffnungen (30, 31) des Eintrittsstutzens (12) zueinander einen Winkel zwischen 60° und 80° bilden und daß die Achse AA' der einen der seitlichen Öffnungen im Eintrittsstutzen (12) einen Winkel von wenigstens ungefähr 90° bezüglich der Geräte-Achse ZZ' bildet, während die Achse BB' der anderen (31) Öffnung mit der Geräteachse ZZ' einen Winkel unter 90° bildet.

2. Gerät nach Anspruch 1, dadurch gekennzeichnet, daß die Seitenwände des zwischen dem ersten (10) und dem zweiten rohrförmigen Bauteil (11) befindlichen ringförmigen Raumes durch dielektrische Werkstoffe isoliert sind.

3. Gerät nach Anspruch 2, dadurch gekennzeichnet, daß das zweite rohrförmige Bauteil (11) aus einem Rohrstück in dielektrischem Werkstoff besteht.

4. Gerät nach Anspruch 2, dadurch gekennzeichnet, daß das zweite rohrförmige Bauteil aus einem metallischen Rohrstück (11a) besteht, das innen mit einem Mantel (11b) aus diektrischem Werkstoff ausgekleidet ist.

5. Gerät nach Anspruch 2, dadurch gekennzeichnet, daß der dielektrische Werkstoff Polypropylen oder Polytetrafluorethylen ist.

6. Anlage zur Behandlung von Wasser, dadurch gekennzeichnet, daß sie mindestens zwei dieser Wasserbehandlungsgeräte (1, 2, 3; 101, 102, 103) nach einem der Ansprüche 1—5 aufweist, die dazu dienen, jeweils verschiedene Bereiche von Durchsatzmengen zu behandeln, wobei der Durchsatzbereich des ersten dieser zwei Geräte höher ist als derjenige des zweiten, und daß die zwei Geräte in Serien montiert sind und durch ein Steuerventil (1a, 2a, 101a, 102a) miteinander verbunden sind, welches dazu dient, mindestens einen Teil des aus dem ersten Gerät abfließenden Durchsatzes zu einem Auslaß (113) der Anlage zu leiten, ohne daß er das zweite Gerät passiert, wenn der Ablauf aus dem ersten Gerät über einem vorgegebenen Grenzwert liegt.

7. Anlage nach Anspruch 6, dadurch gekennzeichnet, daß die zwei Geräte (101, 102) zur Behandlung von Wasser in gegenseitiger Verlängerung im Inneren eines gemeinsamen rohrförmigen Raumes (100) montiert sind, und das Ventil (101a) zwischen diesen zwei Geräten vorgesehen ist.

8. Anlage nach Anspruch 7, in welcher das erste Gerät (101) ein erstes rohrförmiges Bauteil (110) aufweist und ein zweites rohrförmiges Bauteil (111), und in welchem das zweite Gerät (102) ebenfalls ein erstes rohrförmiges Bauteil (120) und ein zweites rohrförmiges Bauteil (121) aufweist, dadurch gekennzeichnet, daß das zweite rohrförmige Bauteil (111) des ersten Gerätes durch den Außenkörper (110) der Anlage gebildet ist, und daß das zweite rohrförmige Bauteil (121) des zweiten Gerätes (102) koaxial im Inneren dieses Außenkörpers (100) so montiert ist, daß es mit ihm einen zweiten Ringraum (128) von etwa gleichem Querschnitt wie der des zwischen zwei rohrförmigen Bauteilen (110 und 111) des ersten Gerätes (101) gebildeten Ringraumes (118).

9. Anlage nach Anspruch 7, dadurch gekennzeichnet, daß das Ventil (101a oder 102a) ein axial bewegliches Mittelstück (142) im Inneren eines unweglichen, mit dem Eintrittsstutzen des nachfolgenden Gerätes (z.B. 102) verbundenen Bauteiles (140) aufweist und ein Federglied, welches dazu dient, das Mittelstück (142) in eine erste Position zu schieben, wenn der Wasserdurchsatz durch das vorhergehende Gerät (z.B. 101) kleiner ist, als der festgelegte Grenzwert und sich zusammenzudrücken und die Verschiebung des Mittelstückes (142) in eine zweite Position zu ermöglichen, wenn der Wasserdurchsatz durch das vorhergehende Gerät höher ist als der festgelegte Grenzwert.

10. Anlage nach Anspruch 9, dadurch gekennzeichnet, daß das Federglied eine Schraubenfeder aufweist.

11. Anlage nach Anspruch 9, dadurch gekennzeichnet, daß das Federglied ein pneumatisches System aufweist, gebildet aus einem zwischen den beweglichen Bauteilen (142) und dem unbeweglichen Teil (140) gebildeten, abgedichteten ringförmigen Raum, wobei dieser Raum so ausgeführt ist, daß man ihn unter Gasdruck setzen kann.

12. Anlage nach Anspruch 7, bestehend aus mehreren hintereinander und in gegenseitiger Verlängerung montierten, koaxial im Inneren des Außenkörpers (100) angeordneten Geräten, wobei jedes Gerät so konzipiert ist, daß die Wassermenge, die das Gerät durchflossen hat und die Wassermenge, die in den das Gerät umgebenden Ringräumen zirkuliert zusammen etwa gleich der Wassermenge am Eintritt des ersten Gerätes sind.

13. Anlage zur Behandlung von Wasser, bestehend aus einem Gerät zur Behandlung von Wasser nach Anspruch 1, dadurch gekennzeichnet, daß es einen dieses Behandlungsgerätes seitlich umgebenden äußeren Ringraum (318) aufweist, und eine Verbindung zwischen dem Eintrittsstutzen und dem Austrittsstutzen ermöglicht, um einen Teil der das Behandlungsgerät umgebenden Wassermenge durchströmen zu lassen und daß der Austrittsstutzen (313) ein bewegliches Organ (324) aufweist, welches so ausgeführt ist, daß es sich zwischen einer Geschlossen-Stellung, in welcher der äußere Ringraum (318) abgesperrt ist, und einer Offen-Stellung bewegen kann, wobei in letzterer weder dieser Raum noch das Behandlungsgerät abgesperrt ist.

14. Anlage nach Anspruch 13, dadurch gekennzeichnet, daß der Austrittsstutzen (313) einen konischen Sitz aufweist, und daß das bewegliche Organ (324) aus einem Ventilkörper besteht, mit einem an den Sitz angepaßten konischen Ansatz, einem Zentralkanal (323), der mit dem Behandlungsgerät über seitliche Öffnungen (323) in Verbindung steht und mindestens einer an seiner Peripherie nach dem konischen Ansatz vorgesehenen axialen Rille (325).

**Claims**

1. Device for conditioning water containing calcium carbonate, this conditioning consisting in causing the water to circulate along a helicoidal path, across a magnetic field created by a column of permanent magnets, separated from each other by intercalated blocks and superposed in such a manner that their adjacent poles are of the same type, these magnets being accommodated within a first tubular element made of electrically insulating material, this device comprising a second tubular element coaxial with the first, arranged so as to provide an annular space between the first and the second tubular element, this device further comprising two tips (12, 13) respectively mounted at the two extremities of the two tubular elements (10, 11), arranged in such a manner that they simultaneously maintain these two tubular elements in their respective positions, these tips comprising a central hole (19, 21), the outlet tip comprising at least a lateral opening (30) providing communication of the central hole with the annular space (18) and the inlet tip (12) comprising two lateral openings (30, 31) which open substantially tangentially into the central hole (19), characterized in that the projections on a plane perpendicular to the axis ZZ' of this device, of the axes AA', BB' of the two lateral openings (30, 31) of the inlet tip (12) form between them an angle lying between 60° and 80°, and in that the axis AA' of one (30) of the lateral openings of the inlet tip (12) forms an angle at least about equal to 90° with respect to the axis ZZ' of the device, while the axis BB' of the other opening (31) forms with the axis ZZ' of the device an angle smaller than 90°.

2. Device according to Claim 1, characterized in that the lateral walls of the annular space provided between the first (10) and the second tubular element (11) are insulated by dielectric materials.

3. Device according to Claim 2, characterized in that said second tubular element (11) consists of a tube section made of a dielectric material.

4. Device according to Claim 2, characterized in that said second tubular element consists of a metallic tube section (11a) internally covered by a sheath (11b), made of a dielectric material.

5. Device according to Claim 2, characterized in that the dielectric material is polypropylene or polytetrafluorethylene.

6. Water conditioning installation, characterized in that it comprises at least two of said water conditioning devices, (1, 2, 3; 101, 102, 103) according to any one of Claims 1 to 5 provided for processing with different respective ranges of flow, the flow range of the first of these two devices being higher than that of the second device, and in that these two devices are mounted in series and are connected via a control valve (1a, 2a, 101a) provided to direct at least a part of the flow coming from the first device to an exit (113) of the installation without passing through the second device if the flow coming from the first device is superior to a determined threshold value.

7. Installation according to Claim 6, characterized in that the two water conditioning devices (101, 102) are mounted in extension of each other within the same tubular compartment (100) and said valve (101a) is disposed between these two devices.

8. Installation according to Claim 7, wherein the first device (101) comprises a first tubular element (110) and a second tubular element (111), and wherein the second device (102) also comprises a first tubular element (120) and a second tubular element (121), characterized in that the second tubular element (111) of the first device is formed by said outer compartment (100) of the installation, and in that the second tubular element (121) of the second device (102) is mounted coaxially within this compartment (100), so as to define therewith a second annular space (128) of substantially equal section to that of the annular space (118) provided between the two tubular elements (110 and 111) of the first device (101).

9. Installation according to Claim 7, characterized in that the valve (101a or 102a) comprises a central element (142) movable axially within a fixed part (140), solid with the inlet tip of the following device (for example 101) and spring means arranged to push the central element (142) into a first position when the water flow rate through the preceding element (for example 101) is below a determined threshold value, and to be compressed and permit displacement of the central element (142) into a second position when the water flow rate through the preceding element is greater than said determined threshold value.

10. Installation according to Claim 9, characterized in that the spring means comprise a spiral spring.

11. Installation according to Claim 9, characterized in that the spring means comprise a pneumatic system consisting of a hermetic annular chamber provided between the movable element (142) and the fixed part (140), this chamber being arranged to contain a gas under pressure.

12. Installation according to Claim 7, comprising several devices mounted in series in extension of each other, disposed coaxially within the outer compartment (100), each device being designed so that the flow rate of the water passing through it and the flow rate of the water circulating in the annular spaces surrounding it, have a sum substantially equal to the flow rate at the inlet of the first device.

13. Water conditioning installation comprising a water conditioning device according to Claim 1, characterized in that it comprises an outer annular space (318) laterally surrounding said conditioning device and connecting the inlet tip with the outlet tip so as to permit a part of the water flow to pass around the conditioning device and in that the outlet tip (313) comprises a movable member (324) arranged so as to be movable between a closing position wherein the outer annular space (318) is closed off and an opening position wherein neither this space nor the conditioning device is closed off.

14. Installation according to Claim 13, characterized in that the outlet tip (313) comprises a conical seat and in that the movable member (324) consists of a shutter equipped with a conical tip adapted to said seat, with a central channel (323) communicating with the conditioning device by lateral openings (322), and with at least one axial groove (325) disposed at its periphery downstream the conical tip.

FIG. 4

FIG. 5

FIG. 1

FIG. 2

FIG. 3

**FIG. 7**

**FIG. 6**

FIG. 8

FIG. 9

313

323

325

326

324

322

300

310

311

315

316

318

314

317

J

321

320 320

H H

319 312

FIG. 10